# EUROPÄISCHE PATENTSCHRIFT

(11) **EP 1 019 324 B1**
(45) Veröffentlichungstag und Bekanntmachung des Hinweises auf die Patenterteilung: **26.11.2003**
(21) Anmeldenummer: 98950027.7
(22) Anmeldetag: 12.09.1998
(51) Int. Cl.: C02F 1/04, B01D 3/34, B01D 1/28, B01D 3/06, B01D 5/00, B01D 1/26

(54) **VERFAHREN UND ANORDNUNG ZUR ABWASSERREINIGUNG**
METHOD AND DEVICE FOR SEWAGE CLARIFICATION
PROCEDE ET DISPOSITIF POUR L'EPURATION DES EAUX RESIDUAIRES

(30) Priorität: 22.09.1997 DE 19741806
(43) Veröffentlichungstag der Anmeldung: 19.07.2000
(73) Patentinhaber: ENVITEC S.A., 152 33 Athens (GR)
(72) Erfinder: Iniotakis, Nicolaos, 72525 Münsingen (DE)
(74) Vertreter: Wolf, Eckhard, Dr.-Ing.
(86) Internationale Anmeldenummer: EP9805814
(87) Internationale Veröffentlichungsnummer: WO99015462

(56) Entgegenhaltungen:
- EP-A- 0 363 838
- US-A- 4 422 903

## Beschreibung

Die Erfindung betrifft ein Verfahren zur Abwasserreinigung durch Mischen und Verdampfen des zu reinigenden Abwassers in einem Schleppgasstrom unter Wärmeausnutzung von gereinigt abströmendem und komprimiertem Schleppgas-Wasserdampfgemisch zur Aufheizung des Schleppgas-Abwassergemisches und Entfernung des durch Überhitzen des Wasserdampfs gebildeten Rückstandes. Die Erfindung betrifft ferner eine Anordnung zur Durchführung dieses Verfahrens.

Bei einem bekannten Verfahren dieser Art (EP-B 0 142 018), bei welchem ein inertes, mit den Inhaltsstoffen des Abwassers nicht reagierendes Schleppgas verwendet wird, soll erreicht werden, daß die im Abwasser enthaltenen, nicht verdampfbaren Substanzen ohne Anfall von Schlamm oder hochsalzhaltiger flüssiger Rückstandsfraktion als nicht flüchtige Phase unmittelbar rückgewinnbar ist, wobei der Reinheitsgrad des abziehenden Dampfes bis zum Reinheitsgrad destillierten Wassers einstellbar sein soll. Es hat sich gezeigt, daß vor allem bei einer Belastung des Abwassers mit organischen, insbesondere ölhaltigen Stoffen es zu Inkrustationen auf der Verdampferseite des Wärmetauschers kommt, die eine häufige Reinigung des Wärmetauschers erfordern. Dies gilt vor allem dann, wenn anstelle des inerten Schleppgases Luft als Sauerstoff verwendet wird, deren Sauerstoffanteil bei den im Reinigungskreislauf auftretenden Temperaturen zu schlammbildenden chemischen Reaktionen mit organischen Inhaltsstoffen führt. Schlamm aus organischen Stoffen ist klebrig und führt zu Inkrustationen an Trennflächen sowie an Heiz- und Wärmetauscherflächen. Dies gilt vor allem dann, wenn der anfallende Rückstand mit einer Restfeuchte von weniger als 50 % abgeführt werden soll.

Weiter ist es bei einem Verfahren und einer Vorrichtung zur Gewinnung reinen Wassers aus Abwasser, vorzugsweise aus Meerwasser an sich bekannt (EP-A 0 363 838), daß das Abwasser in feiner Verteilung in einen Schleppgasstrom eingebracht und erhitzt wird. Die Feststoffpartikel werden vom Schleppgas/Wasserdampfgemisch als ein wässriges Konzentrat abgeschieden, während das gereinigte Schleppgas/Wasserdampfgemisch kondensiert wird.

Ausgehend hiervon liegt der Erfindung die Aufgabe zugrunde, ein Verfahren zur Abwasserreinigung der eingangs angegebenen Art zu entwickeln, das auch bei hoher organischer und anorganischer Belastung des Abwassers einen wartungsfreundlichen und in energetischer Hinsicht optimalen Betrieb gewährleistet. Eine weitere Aufgabe besteht in der Angabe einer Anordnung zur Durchführung des erfindungsgemäßen Verfahrens.

Zur Lösung dieser Aufgabe werden die in den Patentansprüchen 1, und 12 angegebenen Merkmalskombinationen vorgeschlagen. Vorteilhafte Ausgestaltungen und Weiterbildungen der Erfindung ergeben sich aus den abhängigen Ansprüchen.

Das erfindungsgemäße Abwasser-Reinigungsverfahren sieht vor,
- daß das gegebenenfalls vorgeheizte Abwasser in ein strömendes Schleppgas unter Bildung eines fein verteilten Schleppgas-Abwassergemisches eingebracht wird,
- daß das Schleppgas-Abwassergemisch durch einen Verdampferteil einer Wärmetauscherstrecke hindurchgeleitet und dort unter Verdampfen von Wasser und flüchtigen Bestandteilen mit Wärme beaufschlagt
- und anschließend in einem Abscheider in eine ein Schleppgas-Dampfgemisch enthaltende Gasphase und eine ein wässriges Konzentrat enthaltende Flüssig-/Feststoffphase aufgeteilt wird,
- daß das Schleppgas-Dampfgemisch unter Temperaturerhöhung komprimiert und durch einen Kondensatorteil der Wärmetauscherstrecke unter Kondensation des darin befindlichen Wassers und Wärmeabgabe an den Verdampferteil hindurchgeleitet wird,
- daß das Schleppgas von dem Kondensat getrennt und zumindest teilweise zur Aufnahme von weiterem Abwasser in den Reinigungskreislauf zurückgeführt wird,
- daß das wässrige Konzentrat auf Umgebungsdruck entspannt wird,
- und daß der von dem Konzentrat abgegebene Wasserdampf als Brüden aufgefangen, unter Aufheizen komprimiert und unter Wärmeabgabe und Freisetzung von weiterem Wasserdampf aus dem Konzentrat wärmeleitend an diesem vorbeigeführt und dabei kondensiert wird,
- und daß das Brüdenkondensat in das überhitzte Schleppgas-Dampfgemisch zurückgefördert und mit diesem gemischt wird.

Zur Optimierung des Reinigungskreislaufs in energetischer Hinsicht ist es von Vorteil, wenn der vom Konzentrat abgezogene Brüden zusätzlich durch Wärmeaustausch über das überhitzte Schleppgas-Dampfgemisch auf eine erhöhte Temperatur aufgeheizt wird.

Die eigentliche Eindickung und Trocknung des bei der Abwasserreinigung anfallenden Konzentrats auf weniger als 50 % Wassergehalt im Rückstand erfolgt gemäß der Erfindung also in einem nachgeschalteten Verdampfungsprozeß durch Brüdenkompression und unter Ausnutzung von im überhitzten Schleppgas-Wasserdampfgemisch vorhandener Prozeßwärme. Der Brüdenkreislauf kann so geregelt werden, daß bei der Durchmischung des Brüdenkondensats mit dem überhitzten Schleppgas-Dampfgemisch eine Absenkung auf die Sättigungstemperatur erfolgt, was für den Wärmeübergang entlang der Wärmetauscherstrecke optimal ist. Die Eindickung auf der nachgeschalteten, vorzugsweise selbstreinigenden Verdampferstrecke hat außerdem den Vorteil, daß entlang der Wärmetauscherstrecke am Auslauf des Verdampferteils noch ein relativ hoher Flüssigkeitsanteil vorhanden ist, der einer Inkrustation der Wärmetauscherflächen entgegenwirkt. Dadurch kann die Wartungsfrequenz des Wärmetauschers erheblich reduziert werden. Als besonders vorteilhaft hat es sich erwiesen, wenn entlang der Wärmetauscherstrecke maximal 80 % bis 90 % des Wasseranteils des Schleppgas-Abwassergemisches verdampft wird.

Eine weitere Verbesserung in dieser Hinsicht kann dadurch erzielt werden, daß die Wärmetauscherstrecke als solche in zwei Teilstrecken unterteilt wird, wobei entlang einer ersten Teilstrecke 30 % bis 60 % und entlang einer zweiten Teilstrecke weitere 10 % bis 30 % des Wasseranteils des Schleppgas-Abwassergemisches verdampft wird. Dadurch wird erreicht, daß es allenfalls auf der zweiten Teilstrecke zu Inkrustationen kommen kann, die von Zeit zu Zeit entfernt werden müssen.

Das erfindungsgemäße Verfahren eignet sich besonders zur Reinigung von Abwässern mit hohen organischen Belastungen. Das Schleppgas enthält in diesem Fall zweckmäßig Sauerstoff und/oder ein anderes Oxidationsmittel. Die organischen Inhaltsstoffe des Abwassers werden bei den relativ hohen Prozeßtemperaturen durch das Schleppgas teilweise oxidiert und/oder hydrolisiert und in eine filtrierbare Form übergeführt. Von besonderer Bedeutung ist hierbei, daß der Prozeß so geführt werden kann, daß durch Beibehaltung eines ausreichenden Flüssiganteils entlang der Wärmetauscherstrecke die eigentliche Eindickung in die nachgeschaltete Verdampfungszone verlegt wird und dadurch Inkrustationen im Wärmetauscher weitgehend vermieden werden.

Eine weitere bevorzugte Ausgestaltung der Erfindung sieht vor, daß das Schleppgas-Dampfgemisch im Kondensatorteil der Wärmetauscherstrecke unter Kondensation des Wasseranteils auf eine Temperatur unter 100 °C abgekühlt wird und daß das Kondensat vom Schleppgas getrennt und unter Vorheizung des Abwassers abgekühlt wird. Um den Reinheitsgrad des Kondensats zu verbessern, wird gemäß einer bevorzugten Ausgestaltung der Erfindung vorgeschlagen, daß das vom Schleppgas abgetrennte Kondensat unter Freisetzung flüchtiger Bestandteile verdüst wird und daß die dabei freigesetzten flüchtigen Bestandteile aufgefangen und durch ein kaltes Flüssigkeits- oder Wasserbad hindurch unter Zurückhaltung löslicher Bestandteile an die Umgebungsluft abgegeben werden. Um den Abtransport der flüchtigen Bestandteile zu verbessern, ist es von Vorteil, wenn ein Teil des vom Kondensat abgetrennten Schleppgases gegebenenfalls unter Beimischung von Frischgas unter Druck dem Kondensat zu dessen Abkühlung und zum Abtransport der flüchtigen Bestandteile beigemischt wird. Im übrigen wird der überwiegende Teil der vom Kondensat abgetrennten Schleppgase gegebenenfalls unter Beimischung von Frischgas an den verdampferseitigen Zulauf der Wärmetauscherstrecke zurückgeführt.

Zur Durchführung des erfindungsgemäßen Verfahrens ist eine Anordnung zur Abwasserreinigung vorgesehen, die folgende Merkmale aufweist:
- ein Wärmetauscher mit einem Verdampferteil und einem mit diesem thermisch gekoppelten Kondensatorteil,
- dessen Verdampferteil zulaufseitig mit einem feinverteilten Gemisch aus einem Schleppgas und Abwasser unter Druck beaufschlagbar und auslaufseitig mit einem einen Gas- und einen Konzentratauslaß aufweisenden Konzentratabscheider verbunden ist,
- und dessen Kondensatorteil zulaufseitig über eine an den Gasauslaß des Konzentratabscheiders angeschlossene, einen Verdichter enthaltende Leitung mit überhitztem Schleppgas-Dampfgemisch beaufschlagt und auslaufseitig mit einem einen Gas- und einen Kondensatauslaß aufweisenden Kondensatabscheider verbunden ist,
- wobei der Gasauslaß des Kondensatabscheiders zumindest partiell zum Zulauf des Verdampferteils des Wärmetauschers zurückgeführt ist,
- und wobei der Konzentratabscheider mit seinem Konzentratauslaß an eine Verdampferanordnung angeschlossen ist,
- die einen Verdampferraum mit auf Umgebungsdruck liegendem Rückstandsauslaß sowie eine an einen Brüdenauslaß des Verdampferraums angeschlossene, einen Brüdenverdichter enthaltende, entlang einer Kondensationsstrecke wärmeleitend durch den Verdampferraum hindurchgeführte und mit einem Brüdenkondensatauslaß unter Zwischenschaltung einer Pumpe an die Schleppgas-Dampfgemischleitung angeschlossene Brüdenleitung aufweist.

In der erfindungsgemäß nachgeschalteten Verdampferanordnung mit Brüdenkompression wird das vom Konzentratabscheider kommende Konzentrat auf Atmosphärendruck entspannt und thermisch auf eine Restfeuchte von maximal 50 % entwässert. Auf diese Weise wird der Wärmetauscher von anfallenden Dickstoffen, die zu einer Inkrustation führen könnten, entlastet, so daß der Wartungsaufwand erheblich reduziert wird. Eine weitere Verbesserung in dieser Hinsicht wird dadurch erzielt, daß die Verdampferanordnung selbstreinigend ausgebildet ist und beispielsweise einen Dünnschichtverdampfer oder einen Hohlschneckenverdampfer aufweist.

Eine weitere Verbesserung in dieser Hinsicht kann dadurch erzielt werden, daß der Wärmetauscher zwei verdampfer- und kondensatorseitig hintereinander angeordnete, zu Wartungszwecken getrennt zugängliche Wärmetauschereinheiten oder -partien aufweist. Der Wärmetauscher oder die Wärmetauschereinheiten sind dabei zweckmäßig als Plattenwärmetauscher ausgebildet. Der Kondensatausgang der Brüdenleitung kann vor dem Kondensatorzulauf des Wärmetauschers an die Schleppgas-Dampfgemischleitung angeschlossen werden. Grundsätzlich ist es möglich, den Kondensatausgang der Brüdenleitung auch im Bereich zwischen den beiden Wärmetauschereinheiten an die Schleppgas-Dampfgemischleitung anzuschließen.

Um die Prozeßwärme besser nutzen zu können, wird gemäß einer vorteilhaften Ausgestaltung der Erfindung vorgeschlagen, daß die Brüdenleitung eine Überhitzungsstrecke aufweist, die im Wärmeaustausch mit einer Wärmeübertragungsstrecke der vom Konzentratabscheider abgezweigten Schleppgas-Dampfgemischleitung steht. Die Wärmeübertragungsstrecke der Schleppgas-Dampfgemischleitung ist dabei zweckmäßig in Strömungsrichtung hinter dem Schleppgas-Dampfgemischverdichter angeordnet, während die Überhitzungsstrecke der Brüdenleitung in Strömungsrichtung hinter dem Brüdenverdichter angeordnet ist.

Vor allem für den Anfahrvorgang ist es von Vorteil, wenn in der Schleppgas-Dampfgemischleitung in Strömungsrichtung hinter dem Schleppgas-Dampfgemischverdichter eine Heizeinrichtung oder ein Dampfinjektor angeordnet ist.

Eine bevorzugte Ausgestaltung der erfindungsgemäßen Abwasserreinigungsanordnung sieht vor, daß der Kondensatabscheider mit einem Kondensatauslaß an eine in einem Auffangbehälter für das entspannte Kondensat angeordnete Sprühdüse angeschlossen ist und daß der Auffangbehälter einen zu einem Gasfilter führenden Gasauslaß sowie einen Kondensatauslaß aufweist. Der Gasfilter kann dabei einen vorzugsweise gekühltes Wasser enthaltenden Flüssigkeitsbehälter aufweisen, der ein mit dem Gasauslaß des Auffangbehälters verbundenes, in die Flüssigkeit eintauchendes Gasrohr und einen mit der Umgebungsluft kommunizierenden Gasauslaß aufweist. Um die über die Sprühdüse im Auffangbehälter sich ansammelnden flüchtigen Kondensatbestandteile besser austreiben zu können, ist der Auffangbehälter mit unter Überdruck stehendem, hinter dem Kondensatabscheider abgezweigtem Schleppgas oder Frischgas beaufschlagbar. Die in dem im Auffangbehälter aufgefangenen Kondensat enthaltene Wärme kann zur Vorwärmung des zu reinigenden Abwassers benutzt werden, wenn an den Kondensatauslaß des Auffangbehälters eine durch einen Vorwärmer für das Abwasser hindurchgeführte Kondensatleitung angeschlossen ist. Bei Bedarf kann das Kondensat innerhalb des Auffangbehälters noch durch ein geeignetes Filterbett zur Abtrennung von Restverunreinigungen hindurchgeleitet werden.

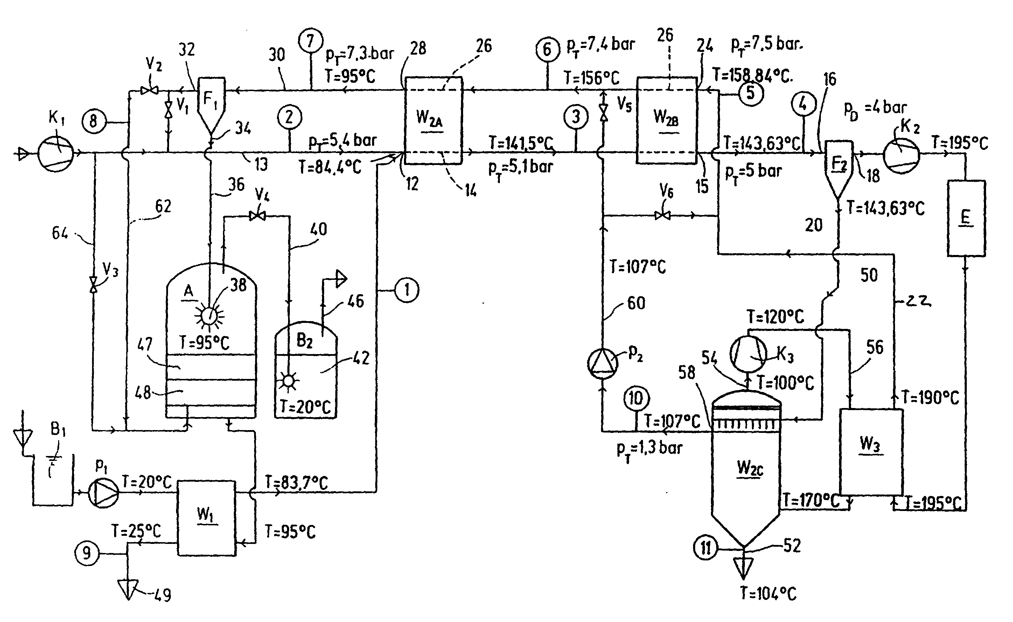

Im folgenden wird die Erfindung anhand der Zeichnung näher erläutert.

Die einzige Figur zeigt ein Fließschema einer Abwasserreinigungsanlage.

Die in dem Fließschema dargestellte Abwasserreinigungsanlage umfaßt einen Abwasserbehälter B₁, von welchem das Abwasser über die Pumpe P₁ zur Vorwärmung durch den Wärmetauscher W₁ hindurch zu einer Mischstelle am Zulauf 12 des Wärmetauschers W_{2A} geführt wird. An der Mischstelle wird das Abwasser mit dem in der Leitung 13 ankommenden, vorzugsweise aus Luft bestehenden Schleppgas gemischt und entlang dem Verdampferteil 14 des aus zwei Einheiten W_{2A} und W_{2B} bestehenden Wärmetauschers unter Wärmeaufnahme zur Verdampfung des darin enthaltenen Wasseranteils gebracht. Am Auslauf 15 des Verdampferteils 14 kommt je nach Einstellung der Betriebsbedingungen eine Mischung aus Schleppgas, Dampf und Tröpfchen an, wobei die Tröpfchen die im Abwasser dispergierten oder gelösten Stoffe enthalten. Von dem Auslauf 15 aus gelangt dieses Gemisch über die Leitung 16 zu dem Konzentratabscheider F₂, der einen Gasauslaß 18 und einen Konzentratauslaß 20 aufweist. In dem Konzentratabscheider F₂ werden die Tröpfchen aus dem ankommenden Massenstrom zurückgehalten und unter Bildung von Konzentrat, das je nach Zusammensetzung des Abwassers in schlammiger Form oder als Kristallbrei vorliegt, über den Konzentratauslaß 20 abtransportiert.

Am Gasauslaß 18 tritt das gereinigte Schleppgas-Dampfgemisch aus und wird in dem Verdichter K₂ unter Temperaturerhöhung verdichtet. Es gelangt über die Leitung 22 zu dem Zulauf 24 des Kondensatorteils 26 der Wärmetauscher W_{2B}, W_{2A} und wird beim Durchströmen des Kondensatorteils 26 unter Kondensation des in ihm enthaltenen Wasseranteils und Wärmeabgabe an den Verdampferteil 11 auf eine Temperatur unter 100 °C am Auslauf 28 des Kondensatorteils 26 abgekühlt. Von dort aus gelangt das Gemisch über die Leitung 30 zu dem Kondensatabscheider F₁, der einen Gasauslaß 32 und einen Kondensatauslaß 34 aufweist. In dem Kondensatabscheider F₁ wird das Kondensat aus dem ankommenden Massenstrom abgetrennt und über den Kondensatauslaß 34 in die Leitung 36 transportiert, während das am Gasauslaß 32 austretende, vom Kondensat getrennte Schleppgas über das Ventil V₁ zur Mischstelle 10 partiell zurückgefördert wird. Mit dem Drosselventil V₁ kann zudem der Verdichter K₂ geregelt werden. Zur Ergänzung des im Kreislauf verbrauchten Schleppgases wird über den Verdichter K₁ Frischluft als Schleppgas in den Kreislauf eingespeist.

Das unter hohem Druck am Kondensatauslaß 34 abgegebene Kondensat wird bei dem gezeigten Ausführungsbeispiel über die Leitung 28 in einen als Stripping-Apparat ausgebildeten Auffangbehälter A geleitet und dort über eine Sprühdüse 38 verdüst. Die hierbei frei werdenden flüchtigen Bestandteile werden über eine Gasleitung 40 mit Ventil V₄ durch das gekühlte Wasser 42 in den Flüssigkeitsbehälter B₂ geleitet. Dabei werden die wasserlöslichen Bestandteile im Wasser gelöst, während das Restgas über die Ausgangsleitung 46 an die Umluft abgegeben wird. Das beim Verdüsen im Stripping-Apparat A verbleibende Kondensat 47 wird am Boden gesammelt und dort gegebenenfalls durch ein Oxidationsfilter 48 hindurch zum Wärmetauscher W₁ geleitet, in welchem die noch vorhandene Wärme an das zu reinigende Abwasser übertragen wird. Das am Wärmetauscher W₁ austretende Kondensat (Pfeil 49) kann entweder zur weiteren Verwendung als Reinwasser aufgefangen oder in die Kanalisation geleitet werden.

Um die über die Sprühdüse 38 im Stripping-Apparat sich ansammelnden flüchtigen Kondensatbestandteile besser austreiben zu können, kann der Behälter A über das Ventil V₂ und die Leitung 62 mit hinter dem Kondensatabscheider abgezweigtem Schleppgas oder über das Ventil V₃ und die Leitung 64 mit Frischgas beaufschlagt werden.

Der Konzentratabscheider F₂ ist mit seinem Konzentratauslaß 20 über die Leitung 50 an einen Verdampfer W_{2C} angeschlossen, in welchem das Konzentrat bis zu einer Restfeuchte von ca. 50 % getrocknet als Rückstand und über den auf Umgebungsdruck liegenden Rückstandauslaß 52 nach außen abgeführt wird. Im oberen Bereich des Verdampfers W_{2C} ist an einen Brüdenauslaß 54 eine Brüdenleitung 56 angeschlossen, in der ein Brüdenverdichter K₃ angeordnet ist und die durch einen Wärmetauscher W₃ hindurchgeführt ist. Im Wärmetauscher W₃ findet ein Wärmeaustausch mit dem in der Leitung 22 transportierten überhitzten Schleppgas-Dampfgemisch statt. Hinter dem Wärmetauscher W₃ ist die Brüdenleitung 56 wärmeleitend durch den Innenraum des Verdampfers W_{2C} hindurchgeführt. Auf dieser Strecke wird der überhitzte Brüden unter Wärmeabgabe an das im Verdampferraum befindliche Konzentrat weitgehend kondensiert. Das am Auslaß 58 ankommende Brüdenkondensat wird über die in dem Leitungszweig 60 der Brüdenleitung angeordnete Pumpe P₂ über das Ventil V₅ oder V₆ dem Schleppgas-Dampfgemisch beigemischt. Eine optimale energetische Nutzung wird bei geöffnetem Ventil V₆ und geschlossenem Ventil V₅ erzielt, wenn durch die Beimischung des Brüdenkondensats die Temperatur des Schleppgas-Dampfgemischs bei den gegebenen Druckverhältnissen etwa auf Sättigungstemperatur am kondensatorseitigen Zulauf 24 abgekühlt wird. In der Schleppgas-Dampfgemischleitung 22 kann zusätzlich in Strömungsrichtung hinter dem Verdichter K₂ ein Erhitzer E angeordnet werden. Der Erhitzer E, der auch durch einen Dampfinjektor ersetzt werden kann, dient dazu, das Anfahren der Anlage zu beschleunigen. Im stationären Betriebszustand kann der Erhitzer E abgeschaltet werden.

In dem Fließschema sind für eine typisch ausgelegte Abwasserreinigungsanlage die an den angegebenen Stellen auftretenden Temperaturen T und Drücke P angegeben, während in der nachstehenden Tabelle die an verschiedenen Stellen des Kreislaufs auftretenden Massendurchsätze angegeben sind. Das zu reinigende Abwasser enthält bei dem Ausführungsbeispiel 5 % dispergierte oder gelöste Sustanzen, wobei von einem Abwasserdurchsatz von 20.000 kg/h ausgegangen wird. Die Abkürzungen in der Zeichnung und in der Tabelle haben folgende Bedeutung:
- ṁ_{W} =: Wasserdurchsatz
- ṁ_{S} =: Feststoffdurchsatz
- ṁ_{L} =: Luftdurchsatz (Schleppgas)
- ṁ_{D} =: Dampfdurchsatz
- p_{T} =: Gesamtdruck
- p_{D} =: Dampf-Partialdruck
- T =: Temperatur

**Tabelle:**

| Massendurchsatz in kg/h an den Positionen 1 bis 11 des Fließschemas | | | | |
|---|---|---|---|---|
| Pos | ṁ_{W} | ṁ_{S} | ṁ_{L} | ṁ_{D} |
| 1 | 19.000 | 1.000 | --- | --- |
| 2 | | | 6.631 | 486 |
| 3 | 7.794 | 1.000 | 6.631 | 11.662 |
| 4 | 3.000 | 1.000 | 6.631 | 16.486 |
| 5 | 829 | --- | 6.631 | 17.657 |
| 6 | 6.519 | --- | 6.631 | 11.967 |
| 7 | 17.946 | --- | 6.631 | 540 |
| 8 | --- | --- | 663 | 54 |
| 9 | 17.946 | --- | --- | --- |
| 10 | 1.617 | --- | --- | 313 |
| 11 | 1.000 | 1.000 | --- | --- |

Mit der vorstehend beschriebenen Anordnung wird folgendes erreicht:
- Der Wärmetauscher W_{2A} braucht bei dem beschriebenen Ausführungsbeispiel nur etwa einmal monatlich und der Wärmetauscher W_{2B} nur alle 15 Tage von Inkrustationen gereinigt zu werden.
- Der Feststoffgehalt des am Rückstandauslaß 52 abgegebenen Rückstandes beträgt mindestens 50 %, ohne daß ein gegenüber dem vorbekannten Stand der Technik erhöhter Energiebedarf entsteht.
- Wegen des geringeren Wartungsbedarfs an den Wärmetauschern werden An- und Abfahrzeiten eingespart, aus denen eine zusätzliche Energieeinsparung von 10 % sowie eine erhebliche Einsparung an Wartungskosten resultieren.
- Mit den erfindungsgemäßen Maßnahmen können ohne zusätzlichen Energieaufwand auch solche Abwässer aufbereitet werden, die bei ihrer Aufkonzentrierung eine Siedepunktserhöhung bis zu ca. 40 °C aufweisen.
- Flüchtige Stoffe im Abwasser, wie Methanol, Ethanol und NH₃ können über den Stripping-Apparat A entfernt und gegebenenfalls im Wasserfilter B₂ aufkonzentriert und verwertet werden.
- Die Wasserqualität des abgegebenen Kondensats wird durch die quantitative Entfernung auch der flüchtigen Stoffe gegenüber dem vorbekannten Stand der Technik wesentlich verbessert.

Zusammenfassend ist folgendes festzuhalten: Die Erfindung bezieht sich auf ein Verfahren und eine Vorrichtung zur Abwasserreinigung durch feines Verteilen und Verdampfen des zu reinigenden Abwassers in einem Schleppgasstrom unter Wärmeausnutzung von gereinigt abströmendem und komprimiertem Schleppgas-Wasserdampfgemisch zur Aufheizung des Schleppgas-Abwassergemisches und Entfernung des durch Überhitzen des Wasserdampfs gebildeten Konzentrats. Um auch bei hoher organischer und anorganischer Belastung des Abwassers einen wartungsfreundlichen und in energetischer Hinsicht optimalen Betrieb zu gewährleisten, wird gemäß der Erfindung vorgeschlagen, daß das Konzentrat in einem Verdampfer mit Brüdenkompression nachgetrocknet wird, wobei das Brüdenkondensat in das überhitzte Schleppgas-Dampfgemisch zurückgefördert und mit diesem gemischt wird.

## Patentansprüche

1. Verfahren zur Abwasserreinigung, bei welchem das gegebenenfalls vorgeheizte Abwasser in ein strömendes Schleppgas unter Bildung eines Schleppgas-Abwassergemisches eingebracht wird, bei welchem das Schleppgas-Abwassergemisch durch einen Verdampferteil (14) einer Wärmetauscherstrecke (W_{2A}, W_{2B}) hindurchgeleitet und dort unter Verdampfen von Wasser und flüchtigen Bestandteilen mit Wärme beaufschlagt und anschließend in einen Gasstrom (Leitung 22) und einen Flüssig-Feststoffstrom (Leitung 50) aufgeteilt wird, wobei der Gasstrom durch ein Schleppgas-Dampfgemisch und der Flüssig-Feststoffstrom durch ein wässriges Konzentrat gebildet ist, bei welchem das Schleppgas-Dampfgemisch unter Temperaturerhöhung komprimiert und durch einen Kondensatorteil (26) der Wärmetauscherstrecke unter Kondensation des im Schleppgas-Dampfgemisch befindlichen Wassers bei Wärmeabgabe an den Verdampferteil (14) hindurchgeleitet wird, bei welchem anschließend das Schleppgas von dem Kondensat getrennt und zumindest teilweise in den Reinigungskreislauf zurückgeführt wird, und bei welchem das wässrige Konzentrat auf Umgebungsdruck entspannt wird, **dadurch gekennzeichnet, daß** der von dem wässrigen Konzentrat abgegebene Wasserdampf als Brüden aufgefangen, unter Aufheizen komprimiert und unter Wärmeabgabe und Freisetzung von weiterem Wasserdampf aus dem Konzentrat wärmeleitend an diesem vorbeigeführt und dabei unter Bildung von Brüdenkondensat kondensiert wird, und daß das Brüdenkondensat in das überhitzte Schleppgas-Dampfgemisch zurückgefördert und mit diesem gemischt wird.

2. Verfahren nach Anspruch 1, **dadurch gekennzeichnet, daß** der Brüden zusätzlich durch Wärmeaustausch über das Schleppgas-Dampfgemisch aufgeheizt wird, bevor es unter Wärmeabgabe an das Konzentrat kondensiert wird.

3. Verfahren nach Anspruch 1 oder 2, **dadurch gekennzeichnet, daß** entlang der Wärmetauscherstrecke (W_{2A}, W_{2B}) maximal 80 % bis 90 % des Wasseranteils des Schleppgas-Abwassergemisches verdampft wird.

4. Verfahren nach einem der Ansprüche 1 bis 3, **dadurch gekennzeichnet, daß** bei der in zwei Teilstrecken (W_{2A} und W_{2B}) unterteilten Wärmetauscherstrecke entlang einer ersten Teilstrecke (W_{2A}) 30 % bis 60 % und entlang einer zweiten Teilstrecke (W_{2B}) weitere 10 % bis 30 % des Wasseranteils des Schleppgas-Abwassergemischs verdampft wird.

5. Verfahren nach einem der Ansprüche 1 bis 4, **dadurch gekennzeichnet, daß** das Schleppgas Sauerstoff oder einen anderen oxidierenden Gasbestandteil enthält.

6. Verfahren nach einem der Ansprüche 1 bis 5, **dadurch gekennzeichnet, daß** das Konzentrat durch den Brüdenkreis auf eine Restfeuchte von weniger als 50 % getrocknet wird.

7. Verfahren nach einem der Ansprüche 1 bis 6, **dadurch gekennzeichnet, daß** das Schleppgas-Dampfgemisch im Kondensatorteil (26) der Wärmetauscherstrecke (W_{2A}, W_{2B}) unter Kondensation des Wasseranteils auf eine Temperatur unter 100 °C abgekühlt wird und daß das Kondensat vom Schleppgas getrennt und unter Vorheizung des zu reinigenden Abwassers abgekühlt wird.

8. Verfahren nach Anspruch 7, **dadurch gekennzeichnet, daß** das vom Schleppgas abgetrennte Kondensat unter Freisetzung flüchtiger Bestandteile verdüst wird, und daß die dabei freigesetzten flüchtigen Bestandteile aufgefangen werden.

9. Verfahren nach Anspruch 8, **dadurch gekennzeichnet, daß** die beim Verdüsen aufgefangenen flüchtigen Bestandteile durch ein kaltes Flüssigkeits- oder Wasserbad (B₂) hindurch unter Zurückhaltung löslicher Bestandteile an die Umgebungsluft abgegeben werden.

10. Verfahren nach Anspruch 8 oder 9, **dadurch gekennzeichnet, daß** ein Teil des vom Kondensat abgetrennten Schleppgases unter Druck in das nach der Verdüsung aufgefangene Kondensat zu dessen Abkühlung und zum Abtransport der flüchtigen Bestandteile eingeleitet wird.

11. Verfahren nach einem der Ansprüche 1 bis 10, **dadurch gekennzeichnet, daß** der überwiegende Teil des vom Kondensat abgetrennten Schleppgases gegebenenfalls unter Beimischung von Frischgas an den verdampferseitigen Zulauf (12) der Wärmetauscherstrekke (W_{2A}, W_{2B}) zurückgeführt wird.

12. Anordnung zur Abwasserreinigung mit einem einen Verdampferteil (14) und einen mit diesem thermisch gekoppelten Kondensatorteil (26) aufweisenden Wärmetauscher (W_{2A},W_{2B}), dessen Verdampferteil' (14) zulaufseitig mit einem feinverteilten Gemisch aus einem Schleppgas und Abwasser unter Druck beaufschlagbar und auslaufseitig mit einem einen Gasund einen Konzentratauslaß (18,20) aufweisenden Konzentratabscheider (F₂) verbunden ist, und dessen Kondensatorteil (26) zulaufseitig über eine an den Gasauslaß (18) des Konzentratabscheiders (F₂) angeschlossene, einen Verdichter (K₂) enthaltende Leitung (22) mit überhitztem Schleppgas-Dampfgemisch beaufschlagt und auslaufseitig mit einem einen Gasund einen Kondensatauslaß (32,34) aufweisenden Kondensatabscheider (F₁) verbunden ist, wobei der Gasauslaß (32) des Kondensatabscheiders (F₁) zumindest partiell zum Zulauf (12) des Verdampferteils (14) des Wärmetauschers (W_{2A},W_{2B}) zurückgeführt ist, **dadurch gekennzeichnet, daß** der Konzentratabscheider (F₂) mit seinem Konzentratauslaß (20) an eine Verdampferanordnung (W_{2C},K₃,56)angeschlossen ist, die einen Verdampferraum (W_{2C})mit auf Umgebungsdruck liegendem Rückstandsauslaß (52) sowie eine an einen Brüdenauslaß (54) des Verdampferraums (W_{2C}) angeschlossene, einen Brüdenverdichter enthaltende, entlang einer Kondensationsstrecke wärmeleitend durch den Verdampferraum (W_{2C}) hindurchgeführte und über einen Brüdenkondensatauslaß (58) unter Zwischenschaltung einer Pumpe (P₂) an die Schleppgas-Dampfgemischleitung (22) angeschlossene Brüdenleitung (60) aufweist.

13. Anordnung nach Anspruch 12, **dadurch gekennzeichnet, daß** die Brüdenleitung (56) eine im Wärmeaustausch mit einer Wärmeübertragungsstrecke (W₃) der vom Konzentratabscheider (F₂) abgezweigten Schleppgas-Dampfgemischleitung (22) stehende Überhitzungsstrecke aufweist.

14. Anordnung nach Anspruch 13, **dadurch gekennzeichnet, daß** die Wärmeübertragungsstrecke (W₃) der Schleppgas-Dampfgemischleitung (22) in Strömungsrichtung hinter dem Schleppgas-Dampfgemischverdichter (K₂) angeordnet ist.

15. Anordnung nach Anspruch 13 oder 14, **dadurch gekennzeichnet, daß** die Überhitzungsstrecke der Brüdenleitung (56) in Strömungsrichtung hinter dem Brüdenverdichter (K₃) angeordnet ist.

16. Anordnung nach einem der Ansprüche 12 bis 15, **dadurch gekennzeichnet, daß** in der Schleppgas-Dampfgemischleitung (22) in Strömungsrichtung hinter dem Schleppgas-Dampfgemischverdichter (K₂) eine Heizeinrichtung (E) oder ein Dampfinjektor angeordnet ist.

17. Anordnung nach einem der Ansprüche 12 bis 16, **dadurch gekennzeichnet, daß** die Verdampferanordnung selbstreinigend ausgebildet ist und vorzugsweise einen Dünnschichtverdampfer oder einen Hohlschnekkenverdampfer aufweist.

18. Anordnung nach einem der Ansprüche 12 bis 17, **dadurch gekennzeichnet, daß** der Wärmetauscher zwei verdampfer- und kondensatorseitig hintereinander angeordnete, zu Wartungszwecken getrennt zugängliche Wärmetauschereinheiten (W_{2A} und W_{2B}) oder -partien aufweist.

19. Anordnung nach einem der Ansprüche 12 bis 18, **dadurch gekennzeichnet, daß** die Brüdenleitung (60) vor dem kondensatorseitigen Zulauf (24) des Wärmetauschers (W_{2A}, W_{2B}) an die Schleppgas-Dampfgemischleitung angeschlossen ist.

20. Anordnung nach einem der Ansprüche 12 bis 19, **dadurch gekennzeichnet, daß** die Brüdenleitung (60) im Bereich zwischen den beiden Wärmetauschereinheiten (W_{2A} und W_{2B}) oder -partien an die Schleppgas-Dampfgemischleitung angeschlossen ist.

21. Anordnung nach einem der Ansprüche 12 bis 20, **dadurch gekennzeichnet, daß** der Kondensatabscheider (F₁) mit seinem Kondensatauslaß (34) an eine in einem unter Atmosphärendruck stehenden Auffangbehälter (A) für das Kondensat (47) angeordnete Sprühdüse (38) angeschlossen ist, und daß der Auffangbehälter (A) einen zu einem Gasfilter (42) führenden Gasauslaß (40) und einen Kondensatauslaß aufweist.

22. Anordnung nach Anspruch 21, **dadurch gekennzeichnet, daß** der Gasfilter (42) einen vorzugsweise gekühltes Wasser enthaltenden Flüssigkeitsbehälter aufweist, der ein mit dem Gasauslaß des Auffangbehälters (A) verbundendes, in die Flüssigkeit eintauchendes Gasrohr (40) und einen mit der Umgebungsluft kommunizierenden Gasauslaß (46) aufweist.

23. Anordnung nach Anspruch 21 oder 22, **dadurch gekennzeichnet, daß** an den Kondensatauslaß des Auffangbehältes (A) eine durch einen Vorwärmer (W₁) für das Abwasser hindurchgeführte Kondensatleitung angeschlossen ist.

24. Anordnung nach einem der Ansprüche 21 bis 23, **dadurch gekennzeichnet, daß** der Auffangbehälter (A) mit hinter dem Kondensatabscheider (F₁) abgezweigtem Schleppgas oder mit Frischluft unter Druck beaufschlagbar ist.

## Claims

1. Process for waste water treatment in which the possibly preheated waste waster is introduced into a flowing entrainment gas with formation of an entrainment gas/waste water mixture, in which process the entrainment gas/waste water mixture is passed through an evaporator part (14) of a heat exchange section (W_{2A}, W_{2B}) and is there subjected to heat with evaporation of water and volatile constituents and then divided into a gas stream (line 22) and a liquid-solids stream (line 50), the gas stream being formed by an entrainment gas/steam mixture and the liquid-solids stream being formed by an aqueous concentrate, in which the entrainment gas/steam mixture is compressed with temperature increase and passed through a condenser part (26) of the heat exchange section with condensation of the water present in the entrainment gas/steam mixture with release of heat at the evaporator part (14), in which the entrainment gas is then separated from the condensate and is at least in part recirculated to the purification circuit, and in which the aqueous concentrate is expanded to ambient pressure,
**characterized in that** the water vapour released from the aqueous concentrate is collected as vapours, compressed with heating and, with release of heat and release of further water vapour from the concentrate, is passed by this in a heat-conducting manner and condensed with formation of vapour condensate, and **in that** the vapour condensate is recirculated back to the superheated entrainment gas/steam mixture and mixed with this.

2. Process according to Claim 1, **characterized in that** the vapour is additionally heated by a heat exchange via the entrainment gas/steam mixture, before the mixture is condensed with release of heat to the concentrate.

3. Process according to Claim 1 or 2, **characterized in that**, along the heat exchange section (W_{2A}, W_{2B}), a maximum of 80% to 90% of the water content of the entrainment gas/waste water mixture is evaporated.

4. Process according to one of Claims 1 to 3, **characterized in that**, in the heat exchange section which is subdivided into two subsections (W_{2A} and W_{2B}), 30% to 60% of the water content of the entrainment gas/waste water mixture is evaporated along a first subsection (W_{2A}), and a further 10% to 30% of the water content of the entrainment gas/waste water mixture is evaporated along a second subsection (W_{2B}).

5. Process according to one of Claims 1 to 4, **characterized in that** the entrainment gas comprises oxygen or another oxidizing gas constituent.

6. Process according to one of Claims 1 to 5, **characterized in that** the concentrate is dried by the vapour circuit to a residual moisture of less than 50%.

7. Process according to one of Claims 1 to 6, **characterized in that** the entrainment gas/steam mixture is cooled to a temperature below 100°C in the condenser part (26) of the heat exchange section (W_{2A}, W_{2B}) with condensation of the water content and **in that** the condensate is separated from the entrainment gas and cooled with preheating of the waste water to be purified.

8. Process according to Claim 7, **characterized in that** the condensate separated off from the entrainment gas is atomized with release of volatile constituents, and **in that** the volatile constituents thus released are collected.

9. Process according to Claim 8, **characterized in that** the volatile constituents collected on atomization are discharged to the ambient air through a cold liquid bath or water bath (B₂) with retention of soluble constituents.

10. Process according to Claim 8 or 9, **characterized in that** a part of the entrainment gas separated off from the condensate is introduced under pressure into the condensate collected after the atomization for its cooling and for transporting away the volatile constituents.

11. Process according to one of Claims 1 to 10, **characterized in that** the predominant part of the entrainment gas separated off from the condensate is recirculated to the heat exchange section (W_{2A}, W_{2B}), if appropriate with admixture of fresh gas at the evaporator-side feed (12).

12. Arrangement for waste water treatment having a heat exchanger (W_{2A}, W_{2B}) having an evaporator part (14) and a condenser part (26) thermally coupled to this evaporator part, the evaporator part (14) of which can be charged on the feed side with a finely divided mixture of an entrainment gas and waste water under pressure and is connected on the outlet side to a concentrate separator (F₂) having a gas outlet and a concentrate outlet (18, 20), and the condenser part (26) of which is charged on the feed side with superheated entrainment gas/steam mixture via a line (22) which is connected to the gas outlet (18) of the concentrate separator (F₂) and has a compressor (K₂) and is connected on the outlet side to a condensate separator (F₁) having a gas outlet and a condensate outlet (32, 34), the gas outlet (32) of the condensate separator (F₁) being at least in part recirculated to the feed (12) of the evaporator part (14) of the heat exchanger (W_{2A}, W_{2B}), **characterized in that** the concentrate separator (F₂) is connected via its concentrate outlet (20) to an evaporator arrangement (W_{2C}, K₃, 56) which has an evaporator space (W_{2C}) having a residual outlet (52) at ambient pressure, and also has a vapour line (60) which is connected to a vapour outlet (54) of the evaporator space (W_{2C}), comprises a vapour compressor, is passed through the evaporator space (W_{2C}) along a condensation section in a heat-conducting manner and is connected via a vapour condensate outlet (58), with intermediate connection of a pump (P₂), to the entrainment gas/steam mixture line (22).

13. Arrangement according to Claim 12, **characterized in that** the vapour line (56) has a superheating section in heat-exchange contact with a heat transfer section (W₃) of the entrainment gas/steam mixture line (22) branched off from the concentrate separator (F₂).

14. Arrangement according to Claim 13, **characterized in that** the heat transfer section (W₃) of the entrainment gas/steam mixture line (22) is disposed, in the direction of flow, downstream of the entrainment gas/steam mixture compressor (K₂).

15. Arrangement according to Claim 13 or 14, **characterized in that** the superheating section of the vapour line (56) is disposed, in the direction of flow, downstream of the vapour compressor (K₃).

16. Arrangement according to one of Claims 12 to 15, **characterized in that** a heating device (E) or a steam injector is disposed in the entrainment gas/steam mixture line (22) downstream, in the direction of flow, of the entrainment gas/steam mixture compressor (K₂).

17. Arrangement according to one of Claims 12 to 16, **characterized in that** the evaporator arrangement is constructed so as to be self-cleaning, and preferably has a thin-film evaporator or a hollow-flight screw evaporator.

18. Arrangement according to one of Claims 12 to 17, **characterized in that** the heat exchanger has two heat-exchange units (W_{2A} and W_{2B}) or heat-exchange sections which are disposed in series on the evaporator side and condenser side and are accessible separately for maintenance purposes.

19. Arrangement according to one of Claims 12 to 18, **characterized in that** the vapour line (60) is connected to the entrainment gas/steam mixture line upstream of the condenser-side feed (24) of the heat exchanger (W_{2A}, W_{2B}).

20. Arrangement according to one of Claims 12 to 19, **characterized in that** the vapour line (60) is connected to the entrainment gas/steam mixture line in the region between the two heat-exchange units (W_{2A} and W_{2B}) or heat-exchange sections.

21. Arrangement according to one of Claims 12 to 20, **characterized in that** the condensate separator (F₁) is connected by its condensate outlet (34) to a spray nozzle (38) which is disposed in a collection vessel (A) for the condensate (47) at atmospheric pressure, and **in that** the collection vessel (A) has a gas outlet (40) leading to a gas filter (42) and has a condensate outlet.

22. Arrangement according to Claim 21, **characterized in that** the gas filter (42) has a liquid vessel preferably containing chilled water, which liquid vessel has a gas pipe (40) which is connected to the gas outlet of the collection vessel (A) and is immersed in the liquid, and has a gas outlet (46) communicating with the ambient air.

23. Arrangement according to Claim 21 or 22, **characterized in that** a condensate line is connected to the condensate outlet of the collection vessel (A) and is passed through a preheater (W₁) for the waste water.

24. Arrangement according to one of Claims 21 to 23, **characterized in that** the collection vessel (A) can be charged with entrainment gas which is branched off downstream of the condensate separator (F₁), or with fresh air, under pressure.

## Revendications

1. Procédé pour l'épuration des eaux résiduaires, dans lequel l'eau résiduaire éventuellement préchauffée est introduite dans un écoulement de gaz vecteur avec formation d'un mélange de gaz vecteur et d'eau résiduaire, dans lequel le mélange de gaz vecteur et d'eau résiduaire est conduit à travers une partie évaporateur (14) d'une section d'échangeur de chaleur (W_{2A}, W_{2B}) et est sollicité à cet endroit avec de la chaleur, avec évaporation d'eau et de constituants volatils, puis est divisé en un courant gazeux (conduite 22) et un courant de matières solides fluides (conduite 50), le courant gazeux étant formé par un mélange de gaz vecteur et de vapeur et le courant de matières solides fluides étant formé par un concentré aqueux, dans lequel le mélange de gaz vecteur et de vapeur est comprimé avec augmentation de la température et est conduit à travers une partie condenseur (26) de la section d'échangeur de chaleur avec condensation de l'eau se trouvant dans le mélange de gaz vecteur et de vapeur avec libération de chaleur au niveau de la partie évaporateur (14), dans lequel ensuite le gaz vecteur est séparé du condensat et est au moins partiellement ramené dans le circuit d'épuration, et dans lequel le concentré aqueux est détendu à la pression environnante, **caractérisé en ce que** la vapeur d'eau libérée du concentré aqueux est recueillie sous forme de vapeur, est comprimée avec chauffage et est conduite, avec libération de chaleur et libération de vapeur d'eau supplémentaire du concentré, avec conduction de la chaleur, au-delà de celui-ci, et est condensée en l'occurrence avec formation de condensat de vapeurs, et **en ce que** le condensat de vapeurs est refoulé dans le mélange de gaz vecteur et de vapeur surchauffé et est mélangé à celui-ci.

2. Procédé selon la revendication 1, **caractérisé en ce que** la vapeur est chauffée en outre par échange de chaleur par le biais du mélange de gaz vecteur et de vapeur, avant d'être condensée sur le concentré avec libération de chaleur.

3. Procédé selon la revendication 1 ou 2, **caractérisé en ce qu'**au maximum 80% à 90% de la proportion d'eau du mélange de gaz vecteur et d'eau résiduaire sont évaporés le long de la section échangeur de chaleur (W_{2A}, W_{2B}).

4. Procédé selon l'une quelconque des revendications 1 à 3, **caractérisé en ce que** dans la section échangeur de chaleur divisée en deux sections partielles (W_{2A} et W_{2B}), le long d'une première section partielle (W_{2A}) 30% à 60% de la proportion d'eau du mélange de gaz vecteur et d'eau résiduaire sont évaporés, et le long d'une deuxième section partielle (W_{2B}), 10% à 30% supplémentaires.

5. Procédé selon l'une quelconque des revendications 1 à 4, **caractérisé en ce que** le gaz vecteur contient de l'oxygène ou un autre constituant gazeux oxydant.

6. Procédé selon l'une quelconque des revendications 1 à 5, **caractérisé en ce que** le concentré est séché à travers le circuit de vapeur à une humidité résiduelle inférieure à 50%.

7. Procédé selon l'une quelconque des revendications 1 à 6, **caractérisé en ce que** le mélange de gaz vecteur et de vapeur est refroidi à une température inférieure à 100°C dans la partie condenseur (26) de la section échangeur de chaleur (W_{2A}, W_{2B}) avec condensation de la proportion d'eau, et **en ce que** le condensat est séparé du gaz vecteur et est refroidi avec préchauffage de l'eau résiduaire à épurer.

8. Procédé selon la revendication 7, **caractérisé en ce que** le condensat séparé du gaz vecteur est atomisé avec libération des constituants volatils, et **en ce que** les constituants volatils ainsi libérés sont recueillis.

9. Procédé selon la revendication 8, **caractérisé en ce que** les constituants volatils recueillis lors de l'atomisation sont dégagés dans l'air environnant à travers un bain froid de liquide ou d'eau (B₂) en retenant les constituants solubles.

10. Procédé selon la revendication 8 ou 9, **caractérisé en ce qu'**une partie du gaz vecteur séparé du condensat est introduite sous pression dans le condensat recueilli après l'atomisation en vue de son refroidissement et de l'évacuation des constituants volatils.

11. Procédé selon l'une quelconque des revendications 1 à 10, **caractérisé en ce que** la majeure partie du gaz vecteur séparé du condensat est éventuellement ramenée avec mélange de gaz frais à l'alimentation (12) du côté évaporateur de la section d'échangeur de chaleur (W_{2A}, W_{2B}).

12. Dispositif pour l'épuration d'eaux résiduaires comprenant un échangeur de chaleur (W_{2A}, W_{2B}) présentant une partie évaporateur (14) et une partie condenseur (26) couplée thermiquement à celle-ci, dont la partie évaporateur (14) peut être sollicitée, du côté de l'alimentation, par un mélange finement réparti d'un gaz vecteur et d'eau résiduaire sous pression, et du côté de la sortie, est connectée à un séparateur de concentré (F₂) présentant une sortie de gaz et une sortie de concentré (18, 20), et dont la partie condenseur (26) est sollicitée, du côté de l'alimentation, par le biais d'une conduite (22) raccordée à la sortie de gaz (18) du séparateur de concentré (F₂) et contenant un compresseur (K₂), par un mélange surchauffé de gaz vecteur et de vapeur, et est raccordée, du côté de la sortie, à un séparateur de condensat (F₁) présentant une sortie de gaz et de condensat (32, 34), la sortie de gaz (32) du séparateur de condensat (F₁) étant au moins partiellement ramenée à l'alimentation (12) de la partie évaporateur (14) de l'échangeur de chaleur (W_{2A}, W_{2B}), **caractérisé en ce que** le séparateur de concentré (F₂) est raccordé avec sa sortie de concentré (20) à un agencement d'évaporateur (W_{2C}, K₃, 56), qui présente une chambre d'évaporateur (W_{2C}) avec une sortie de résidu (52) à la pression environnante, ainsi qu'une conduite de vapeur (60) raccordée à une sortie de vapeur (54) de la chambre d'évaporateur (W_{2C}), contenant un compresseur de vapeur, guidée le long d'une section de condensation conduisant la chaleur à travers la chambre d'évaporateur (W_{2C}) et raccordée par le biais d'une sortie de condensat de vapeur (58) avec interposition d'une pompe (P₂) à la conduite de mélange de gaz vecteur et de vapeur (22).

13. Dispositif selon la revendication 12, **caractérisé en ce que** la conduite de vapeur (56) présente une section de surchauffage en échange thermique avec une section de transfert de chaleur (W₃) de la conduite de mélange de gaz vecteur et de vapeur (22) partant du séparateur de concentré (F₂).

14. Dispositif selon la revendication 13, **caractérisé en ce que** la section de transfert de chaleur (W₃) de la conduite de mélange de gaz vecteur et de vapeur (22) est disposée dans la direction de l'écoulement derrière le compresseur du mélange de gaz vecteur et de vapeur (K₂).

15. Dispositif selon la revendication 13 ou 14, **caractérisé en ce que** la section de surchauffage de la conduite de vapeur (56) est disposée, dans la direction de l'écoulement, derrière le compresseur de vapeur (K₃).

16. Dispositif selon l'une quelconque des revendications 12 à 15, **caractérisé en ce que** l'on prévoit, dans la conduite de mélange de gaz vecteur et de vapeur (22), dans la direction de l'écoulement derrière le compresseur de mélange de gaz vecteur et de vapeur (K₂), un dispositif de chauffage (E) ou un injecteur de vapeur.

17. Dispositif selon l'une quelconque des revendications 12 à 16, **caractérisé en ce que** le dispositif d'évaporateur est réalisé de manière auto-nettoyante et présente de préférence un évaporateur à couches minces ou un évaporateur à vis creuse.

18. Dispositif selon l'une quelconque des revendications 12 à 17, **caractérisé en ce que** l'échangeur de chaleur présente deux unités ou parties d'échangeur de chaleur (W_{2A} et W_{2B}) disposées l'une derrière l'autre du côté de l'évaporateur et du condenseur, accessibles séparément pour des besoins d'entretien.

19. Dispositif selon l'une quelconque des revendications 12 à 18, **caractérisé en ce que** la conduite de vapeur (60) est raccordée avant l'alimentation côté condenseur (24) de l'échangeur de chaleur (W_{2A}, W_{2B}) à la conduite de mélange de gaz vecteur et de vapeur.

20. Dispositif selon l'une quelconque des revendications 12 à 19, **caractérisé en ce que** la conduite de vapeur (60) est raccordée, dans la région comprise entre les deux unités ou parties d'échangeur de chaleur (W_{2A} et W_{2B}) à la conduite de mélange de gaz vecteur et de vapeur.

21. Dispositif selon l'une quelconque des revendications 12 à 20, **caractérisé en ce que** le séparateur de condensat (F₁) est raccordé avec sa sortie de condensat (34) à une buse de pulvérisation (38) disposée dans un récipient de collecte (A) pour le condensat (47) se trouvant à la pression atmosphérique, et **en ce que** le récipient de collecte (A) présente une sortie de gaz (40) conduisant à un filtre à gaz (42) et une sortie de condensat.

22. Dispositif selon la revendication 21, **caractérisé en ce que** le filtre à gaz (42) présente un récipient de liquide contenant de l'eau de préférence refroidie, qui présente un tube de gaz (40) raccordé à la sortie de gaz du récipient de collecte (A) et plongeant dans le liquide, et une sortie de gaz (46) communiquant avec l'air environnant.

23. Dispositif selon la revendication 21 ou 22, **caractérisé en ce qu'**une conduite de condensat guidée à travers un préchauffeur (W₁) pour l'eau résiduaire est raccordée à la sortie de condensat du récipient de collecte (A).

24. Dispositif selon l'une quelconque des revendications 21 à 23, **caractérisé en ce que** le récipient de collecte (A) peut être sollicité avec du gaz vecteur dérivé derrière le séparateur de condensat (F₁), ou avec de l'air frais sous pression.
